# EUROPEAN PATENT APPLICATION

(11) **EP 4 036 309 A1**
(43) Date of publication of application: **03.08.2022**
(21) Application number: 20871748.8
(22) Date of filing: 09.07.2020
(51) Int. Cl.: E01H 1/08, F04D 25/08

(54) **BACKPACK BLOWER WORK APPARATUS**

(30) Priority: 02.10.2019 JP 2019182030
(71) Applicant: Yamabiko Corporation, Ohme-shi Tokyo 198-8760 (JP)
(72) Inventor: SUZUKI, Kenji, Ohme-shi, Tokyo 198-8760 (JP); CHIBA, Mitsutane, Ohme-shi, Tokyo 198-8760 (JP)
(74) Representative: Canzler & Bergmeier Patentanwälte Partnerschaft mbB
(86) International application number: PCT/JP2020/026861
(87) International publication number: WO 2021/065143

(57) **Abstract**

The purpose of the present invention is to offer less fatigue to an operator by reducing loads to shoulders, the lower back, and legs even in an operation with a large battery. This backpack blower work apparatus comprises a back frame, a volute case mounted in the back frame, a centrifugal fan installed in the volute case, an electric motor that is assembled into the volute case and rotates the centrifugal fan, and a battery that is attached to the back frame and feeds power to the electric motor. The back frame has shoulder belts for shouldering and the volute case in the upper part and has a battery installation space in the lower part. The battery installation space is vertically and horizontally extended longer than in the front-back direction.

## Description

### Technical field

The present invention relates to a backpack blower working machine.

### Background art

Conventionally, there has been known a backpack blower working machine including a backpack frame configured to be carried on the back of a worker by shoulder straps, a volute case mounted on the backpack frame, a centrifugal fan rotatably supported in the volute case, an electric motor assembled to the volute case and configured to rotate the centrifugal fan, and a battery pack detachably attached to the backpack frame and configured to supply the electric motor with electricity (see Patent Literature 1).

### Citation list

### Patent Literature

PTL1: Japanese Patent Application Laid-Open No. 2016-204931

### Summary of Invention

### Technical Problem

The conventional backpack blower working machine has a problem that the backpack frame including the electric motor and the battery pack which are heavy components is worn on the worker only by the shoulder straps, and therefore, when the work is continued for a long time, a heavy load is applied intensively to the shoulders, and consequently the fatigue of the shoulders is increased.

In addition, the conventional backpack blower working machine has a problem that the backpack frame may be forced to move in the direction to separate from the back of the worker due to the reactive force of the blow pressure during the work, and by this means, the load applied to the shoulders is increased, and consequently the fatigue of the shoulders is increased. Moreover, the conventional backpack blower working machine has a problem that the worker holds on so as not to fall down backward (in the direction to turn to the back side from the waist or the legs) to oppose to the reactive force of the blow pressure and the gravity of the heavy components mounted on the back as described above, and therefore the strain on the waist and the legs is increased.

Here, in order to prevent the strain on the shoulders, the waist, and the legs from increasing as described above, a high-capacity battery cannot be mounted, and this causes a problem that it is not possible to continue the work for a long time.

The present invention has been proposed to address the above-described problems. It is therefore an object of the invention to provide a backpack blower working machine capable of reducing the strain on the shoulders, the waist and the legs during the work to reduce the fatigue of the shoulders, the waist and the legs, and mounting a large battery to continue the work for a long time.

### Solution to Problem

To achieve the object, the invention provides a backpack blower working machine including: a back frame worn to be carried on a back of a worker; a volute case mounted on the back frame; a centrifugal fan equipped in the volute case; an electric motor assembled to the volute case and configured to rotate the centrifugal fan; and a battery attached to the back frame and configured to supply the electric motor with electricity. The back frame includes an upper section and a lower section. Shoulder belts for carrying and the volute case are provided on the upper section. A battery arrangement space for the battery is provided in the lower section, and has a length in an up-and-down direction and a length in a right and left direction each of which is longer than a length in a front-to-back direction.

### Advantageous effect

According to the invention, even though a large battery is mounted, it is possible to support the lower section of the back frame by the waist, and therefore to reduce the strain on the shoulders, the waist and the legs during the work. In addition, even when the reactive force of the blow pressure is applied during the work, the lower section of the back frame having a high ratio of the weight distribution is supported by the waist. By this means, the strain in the direction to turn from the waist or the legs is reduced to avoid excess strain on the shoulders, the waist and the legs.

### Brief Description of Drawings

Fig. 1 is a perspective view illustrating the whole backpack blower working machine;
Fig. 2 is a side view illustrating the backpack blower working machine;
Fig. 3 is a back view illustrating the backpack blower working machine;
Fig. 4 is a cross-sectional view illustrating essential parts of the backpack blower working machine; and
Fig. 5 illustrates a state where the backpack blower working machine is used.

### Description of Embodiments

Hereinafter, an embodiment of the present invention will be described with reference to the drawings. The same reference numbers in the different drawings indicate the same functional parts, and therefore repeated description for each of the drawings is omitted. In the drawings, arrows in X direction point to the front (opposite to the back), arrows in Y direction point to the side (the right or the left), and arrows in Z direction point to the upside (opposite to the downside).

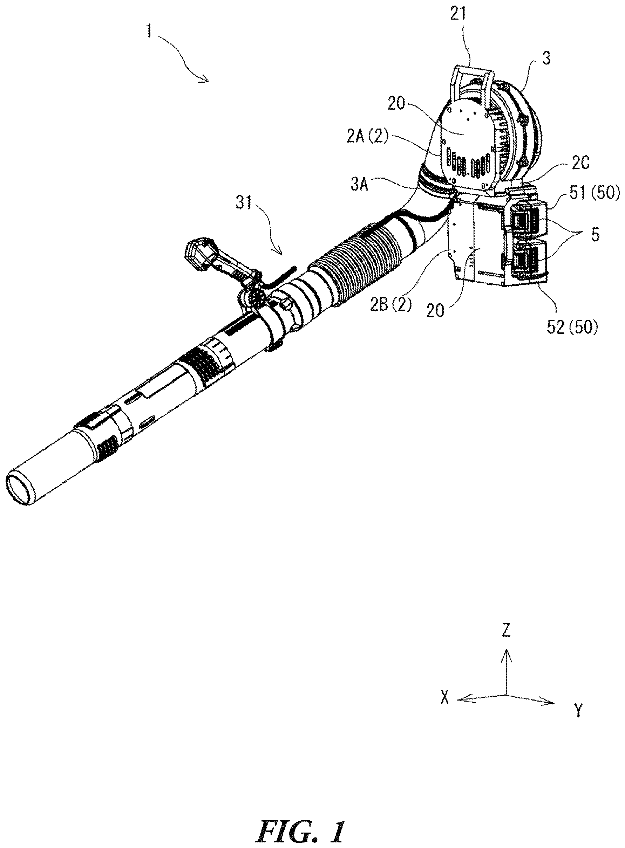

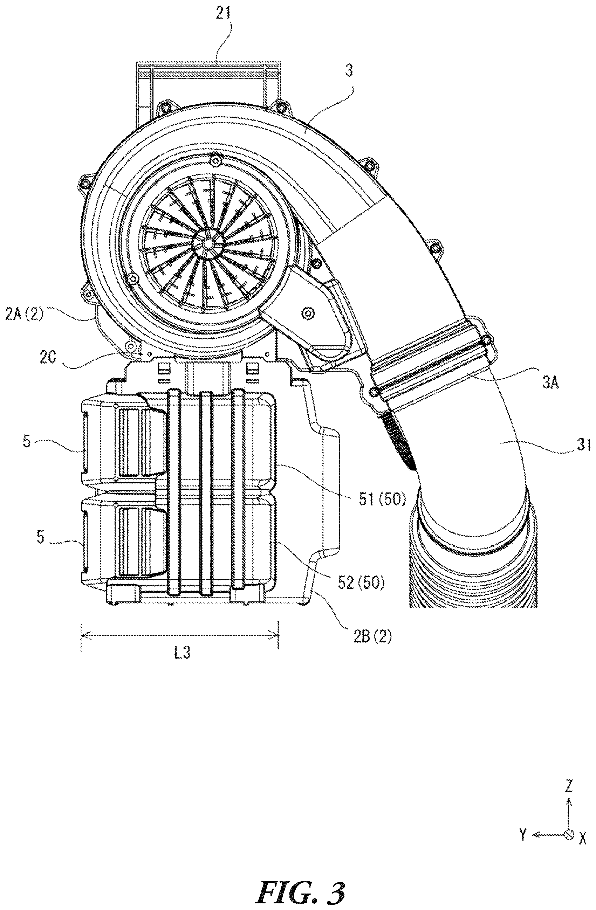

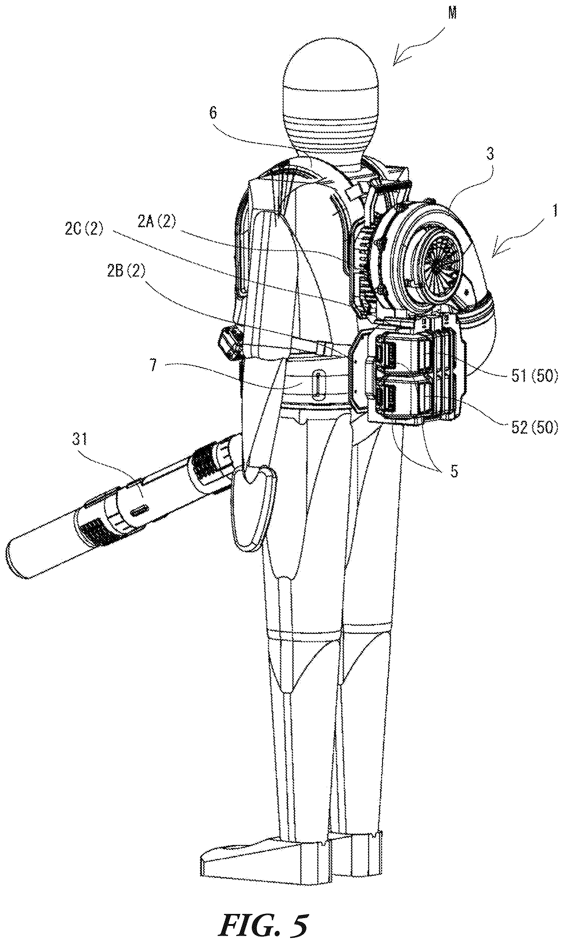

As illustrated in Figs. 1 to 5, a backpack blower working machine 1 includes a back frame 2, a volute case 3 mounted on the back frame 2, a centrifugal fan 30 equipped in the volute case 3, an electric motor 4 assembled to the volute case 3 and configured to rotate the centrifugal fan 30, and batteries 5 attached to the back frame 2 and configured to supply the electric motor 4 with electricity. A blower tube 31 is connected to a blowing outlet 3A of the volute case 3. As illustrated in Fig. 5, a worker M carrying the backpack blower working machine 1 on the back operates the blower tube 31 by the hand to perform blowing work such as cleaning of fallen leaves.

The back frame 2 is a frame worn to be carried on the back of a worker, and includes an upper section 2A and a lower section 2B. The front side of each of the upper section 2A and the lower section 2B is formed as a back pad 20, and a handle 21 is provided on the top of the upper section 2A. With an example illustrated, the upper section 2A and the lower section 2B are formed as individual parts, and coupled to one another at a coupling part 2C.

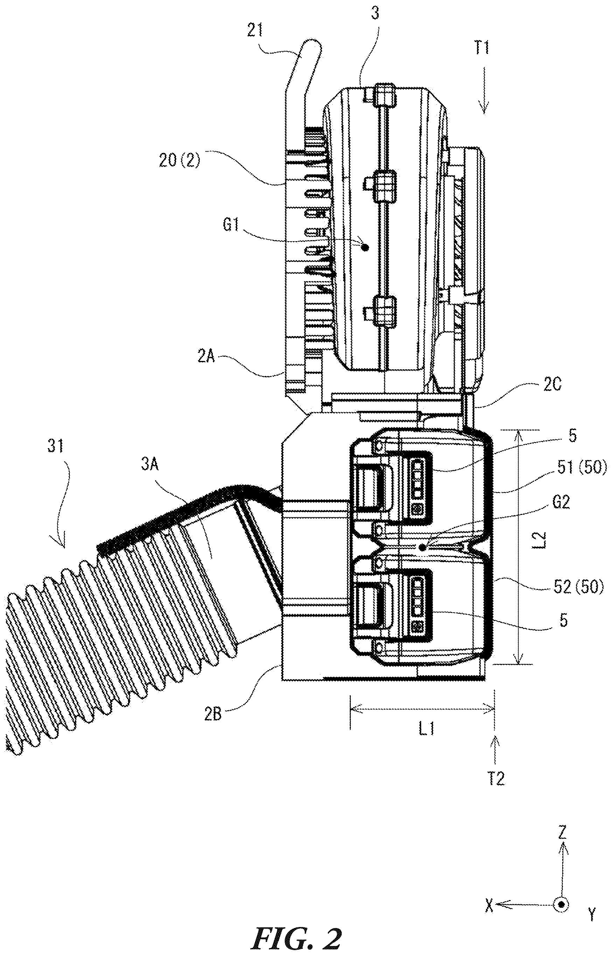

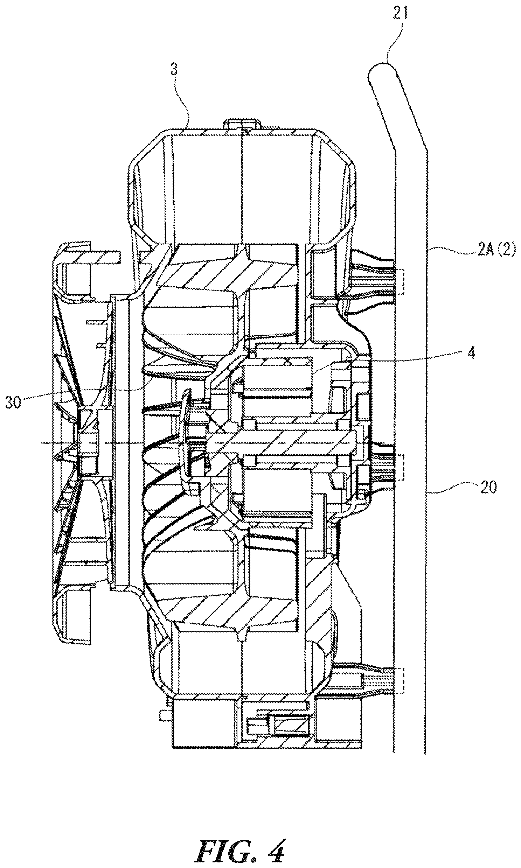

The volute case 3 is mounted on the upper section 2A of the back frame 2. As illustrated in Fig. 4, the centrifugal fan 30 is equipped in the volute case 3, and the electric motor 4 configured to rotate the centrifugal fan 30 is supported on the upper section 2A. In the upper section 2A, the electric motor 4 is provided on the back surface side of the above-described back pad 20, and the centrifugal fan 30 is disposed backward of the electric motor 4. The electric motor 4 having a heavy weight is disposed on the back frame 2 side, and therefore a center of gravity G1 of the components mounted on the upper section 2A is located near the back frame 2 as illustrated in Fig. 2.

The lower section 2B of the back frame 2 includes a battery arrangement space in which the above-described batteries 5 are mounted. A battery holder 50 is supported in the battery arrangement space of the lower section 2B, and slidably holds the batteries 5 in the longitudinal direction. The battery holder 50 includes a plurality of battery holders 51 and 52 to arrange the plurality of batteries 5 vertically with the longitudinal direction of the plurality of batteries 5 facing horizontally.

The entire battery arrangement space has a length L1 along the front-to-back direction (the X direction in the drawing) and a length L2 along the up-and-down direction (the Z direction in the drawing) as illustrated in Fig. 2, and has a length L3 along the right and left direction (the Y direction in the drawing). Moreover, each of the length L2 in the up-and-down direction and the length L3 in the right and left direction of the battery arrangement space is longer than the length L1 in the front-to-back direction.

The plurality of batteries 5 are provided in the lower section 2B of the back frame 2. By this means, the weight of the components (the batteries 5 and the battery holder 50) provided in the back frame 2B is greater than the weight of the components (the volute case 3, the centrifugal fan 30, and the electric motor 4) provided in the upper section 2A of the back frame 2.

In addition, when the back ends (T1 in Fig. 2) of the components mounted on the upper section 2A of the back frame 2 is compared to the back ends (T2 in Fig. 2) of the components mounted on the lower section 2B, the position of T2 in Fig. 2 is at the same level as or more backward than that of T1 in Fig. 2. In addition, the center of gravity G1 of the components mounted on the upper section 2A of the back frame 2 is located more forward (toward the X direction in the drawing) than a center of gravity G2 of the components mounted on the lower section 2B.

This backpack blower working machine 1 includes shoulder belts 6 for carrying which are provided on the upper section 2A of the back frame 2 as illustrated in Fig. 5. To perform the blowing work, the shoulder belts 6 are worn around the shoulders of the worker M to carry the back frame 2 on the back. In this case where the shoulder belts 6 are worn around the shoulders of the worker M, the back frame 2 is supported to turn around the shoulders of the worker M to move the lower section 2B forward, due to the weight distribution of the components mounted on the upper section 2A and the components mounted on the lower section 2B of the back frame 2. Therefore, the lower section 2B is maintained to be close to the body of the worker M during the work. By this means, the strain on the shoulders of the worker M is dispersed around the waist of the worker M, and therefore the strain on the shoulders, the waist, and the legs is reduced.

In addition, each of the length L2 in the up-and-down direction and the length L3 in the right and left direction of the battery arrangement space for the batteries 5 mounted on the lower section 2B is longer than the length L1 in the front-to-back direction. Therefore, the batteries 5 having a heavy weight are supported around the waist in a relatively large area, and consequently the back frame 2 can be stably carried on the back.

Moreover, as illustrated in Fig. 5, a waist belt 7 to be wrapped around the waist is provided on the lower section 2B, and the waist is wrapped by the waist belt 7. By this means, it is possible to fix the lower section 2B. In this way, when the lower section 2B is fixed to the waist, the back frame 2 can be more stably carried on the back.

In this case, it is preferred that the upper section 2A and the lower section 2B are coupled to one another at the coupling part 2C, and more preferred that the coupling part 2C is flexible. The upper section 2A and the lower section 2B are formed as individual parts and coupled to one another, and therefore the lower section 2B having a high ratio of the weight distribution can be separated from the upper section 2A and fixed to around the waist of the worker M. By this means, even when the upper section 2A is moved by the reactive force of the blow pressure during the work, the lower section 2B of the back frame 2 having a high ratio of the weight distribution is supported around the waist. By this means, the strain in the direction to turn from the waist or the legs is reduced, and it is possible to avoid excess strain on the shoulders, the waist and the legs of the worker M. The upper section 2A and the lower section 2B are coupled to one another during the work, but may be separated from one another when the work is not performed.

Even when this backpack blower working machine 1 includes the large batteries 5 having a heavy weight, the back frame 2 can be more stably carried on the back thanks to this heavy weight, and therefore it is possible to reduce the strain on the worker. Therefore, it is possible to dispose the plurality of large batteries 5 to continue the work of the backpack blower working machine 1 for a long time. In this case, the plurality of batteries 5 are arranged vertically with the longitudinal direction of the plurality of batteries 5 facing horizontally, and therefore the plurality of batteries 5 are close to the body and supported around the waist in a large area.

As described above, the embodiments of the present invention have been described in detail with reference to the drawings. However, the specific configuration is not limited to the embodiments, and the design can be changed without departing from the scope of the present invention. In addition, the above-described embodiments can be combined by utilizing each other's technology as long as there is no particular contradiction or problem in the purpose and configuration.

### Reference Signs List

1: backpack blower working machine,
2: back frame, 2A: upper section, 2B: lower section,
2C: coupling part,
20: back pad, 21: handle,
3: volute case, 3A: blowing outlet,
30: centrifugal fan, 31: blower tube,
4: electric motor, 5: battery,
50, 51, 52: battery holder,
6: shoulder belt, 7: waist belt

## Claims

1. A backpack blower working machine (1) comprising:
a back frame (2) worn to be carried on a back of a worker;
a volute case (3) mounted on the back frame (2);
a centrifugal fan (30) equipped in the volute case (3) ;
an electric motor (4) assembled to the volute case (3) and configured to rotate the centrifugal fan (30); and
a battery (5) attached to the back frame (2) and configured to supply the electric motor (4) with electricity,
the back frame (2) including an upper section (2A) and a lower section (2B), wherein:
shoulder belts (6) for carrying and the volute case (3) are provided on the upper section (2A); and
a battery arrangement space for the battery (5) is provided in the lower section (2B), the battery arrangement space having a length in an up-and-down direction and a length in a right and left direction each of which is longer than a length in a front-to-back direction.

2. The backpack blower working machine (1) according to claim 1, wherein the lower section (2B) of the back frame (2) includes a waist belt (7) to be wrapped around a waist.

3. The backpack blower working machine (1) according to one of claims 1 and 2, wherein a weight of a component provided in the lower section (2B) is greater than a weight of a component provided in the upper section (2A).

4. The backpack blower working machine (1) according to one of claims 1 to 3, wherein a center of gravity of a component mounted on the upper section (2A) is forward of a center of gravity of a component mounted on the lower section (2B).

5. The backpack blower working machine (1) according to one of claims 1 to 4, wherein a back end of a component mounted on the lower section (2B) is located at a same level as or more backward than a back end of a component mounted on the upper section (2A) in the front-to-back direction.

6. The backpack blower working machine (1) according to one of claims 1 to 5, wherein the centrifugal fan (30) is disposed backward of the electric motor (4).

7. The backpack blower working machine (1) according to one of claims 1 to 6, wherein a plurality of batteries (5) are arranged vertically with the longitudinal direction of the plurality of batteries (5) facing horizontally.

8. The backpack blower working machine (1) according to claim 7, wherein the lower section (2B) includes battery holders (50, 51, 52) configured to slidably hold the batteries (5) in the longitudinal direction.

9. The backpack blower working machine (1) according to one of claims 1 to 8, wherein the upper section (2A) and the lower section (2B) of the back frame (2) are coupled to one another at a coupling part (2C).

10. The backpack blower working machine (1) according to claim 9, wherein the coupling part (2C) is flexible.
